# EUROPÄISCHE PATENTSCHRIFT

(11) **EP 3 436 722 B1**
(45) Veröffentlichungstag und Bekanntmachung des Hinweises auf die Patenterteilung: **23.09.2020**
(21) Anmeldenummer: 17715079.4
(22) Anmeldetag: 28.03.2017
(51) Int. Cl.: F16J 3/04, F16D 3/84

(54) **BALG MIT BELÜFTUNGSMITTEL**
BELLOWS HAVING AERATING MEANS
SOUFFLET À MOYEN DE VENTILATION

(30) Priorität: 31.03.2016 DE 102016105901
(43) Veröffentlichungstag der Anmeldung: 06.02.2019
(73) Patentinhaber: GKN Driveline International GmbH, 53797 Lohmar (DE)
(72) Erfinder: DEISINGER, Markus, 53721 Siegburg (DE); BUSCH, Winfried, 53773 Hennef (DE); WENNING, Ludger, 53819 Neunkirchen-Seelscheid (DE)
(74) Vertreter: Geskes, Christoph
(86) Internationale Anmeldenummer: PCT/EP2017/057320
(87) Internationale Veröffentlichungsnummer: WO 2017/167757

(56) Entgegenhaltungen:
- DE-A1-102005 006 884
- GB-A- 2 296 946
- KR-A- 20110 060 563

## Beschreibung

Die vorliegende Erfindung betrifft einen Balg mit einem ersten Befestigungsbereich mit einem ersten Durchmesser und mit einem zweiten Befestigungsbereich mit einem zweiten Durchmesser, wobei der erste Durchmesser kleiner als der zweite Durchmesser ist, und wobei der erste Befestigungsbereich auf seinem Außenumfang einen Bindersitzbereich umfasst, als auch ein Verfahren zur Befestigung eines solchen Balges und dessen Verwendung für die Abdichtung von Wellen.

Balge der eingangs genannten Art, welche beispielsweise als Faltenbalge oder aber als Rollbalge ausgestaltet sein können, werden zur Abdichtung einer Anordnung aus einem ersten Maschinenteil, angeordnet an einem zweiten Maschinenteil, eingesetzt. Beispiele für solche Anordnungen sind beispielsweise Gelenke, insbesondere Gleichlaufgelenke in Automobilen. Balge dienen dabei beispielsweise zur Abdichtung von Gleichlaufverschiebegelenken oder aber Festgelenken. Aber auch andere Anwendungen außerhalb der Automobilindustrie sind bekannt.

Bei der Montage von Balgen auf Maschinenteilen kann sich im Innern des Balges ein Überdruck aufbauen. Dieser hat insbesondere einen negativen Einfluss auf die Dichtwirkung des eingesetzten Balges, auch aufgrund der Entstehung von Ermüdungsrissen, die zu einem vorzeitigen Versagen des Balges führen können. Dies ist besonders relevant in Fällen, in welchen ein Balg mit seinem zweiten Befestigungsbereich mit dem zweiten, größeren Durchmesser bereits auf einem zweiten Maschinenteil vormontiert ist und nachfolgend dann erst das erste Maschinenteil am zweiten Maschinenteil angeordnet wird. Das erste Maschinenteil muss dann in den bereits vormontierten Balg durch die dem ersten Maschinenteil gegenüberliegende Öffnung des Balges am ersten Befestigungsbereich eingeschoben werden.

Weist ein Balg im Inneren einen Überdruck auf, wird dessen Dichtwirkung insbesondere auch dadurch reduziert, dass dann im Balg vorhandenes Fett, welches der Schmierung, aber auch Geräuschminderung etc. dient, austreten kann. Auch kann es gegebenenfalls zu inkorrekten Positionierungen des ersten Maschinenteils kommen, oder aber zu einer nicht ausreichend festen und dichten Befestigung des ersten Befestigungsbereichs auf den ersten Maschinenteil durch ein Befestigungsmittel, beispielsweise einen Kompressionsring oder ein Spannband. Besonders problematisch ist dies bei Einsatz von thermoplastischen Elastomeren als Materialien für einen Balg, da diese anders als Balge aus Gummimaterialien aufgrund ihrer anderen Materialeigenschaften und der größeren Festigkeit sich negativ auf die Dichtungseigenschaften auswirken. Ganz besonders relevant wird dies bei Befestigungsbereichen von Balgen mit einem kleinen Durchmesser.

GB 2 296 946 A offenbart einen Faltenbalg mit am Innenumfang des wellenseitigen Befestigungsbereiches angeordneten rechteckigen Mitteln, die eine permanente Belüftung des Faltenbalges ermöglichen und dabei so konstruiert sind, dass Fett aus dem Inneren des Balges nicht austreten soll.

Aufgabe der vorliegenden Erfindung ist es, einen Balg und ein Verfahren zur Befestigung eines Balges zur Verfügung zu stellen, wodurch die Bildung von Überdruck im Balginnern, vor allem bei Montage eines Balges auf einer Welle, vermieden wird, und insbesondere gleichzeitig eine gute Dichtwirkung nach Befestigung gegeben ist.

Diese Aufgabe wird gelöst durch einen Balg der eingangs genannten Art, bei welchem an einem Innenumfang des ersten Befestigungsbereiches mindestens ein erstes und mindestens ein zweites Belüftungsmittel angeordnet sind, die axial beabstandet voneinander an dem mit einer ebenen Oberfläche ausgebildeten Innenumfang angeordnet sind und über die Oberfläche des Innenumfangs des ersten Befestigungsbereiches hervorstehen, wobei durch Befestigung des ersten Befestigungsbereiches mittels des Befestigungsmittels zwischen axial beabstandeten ersten und zweiten Belüftungsmitteln ein Bereich mit einer wulstartigen Materialverschiebung ausbildbar ist, der mit einer Oberfläche eines ersten Maschinenteils in Kontakt bringbar ist.

Ein erfindungsgemäßer Balg weist zwischen dem ersten Befestigungsbereich und dem zweiten Befestigungsbereich ein Mittelteil auf, welches beispielsweise im Falle eines Faltenbalges als Faltenbereich angesprochen werden kann, oder aber wie bei einem Rollbalg ausgebildet sein kann. Dabei kann zwischen dem Mittelteil und dem ersten Befestigungsbereich bevorzugt ein konusartiger Fortsatz angeordnet sein, was insbesondere bei Ausbildung als Rollbalg, allgemeiner bei einer Ausbildung ohne einen Faltenbereich mit mehr als einer Falte, bevorzugt ist. Bevorzugt ist der Balg als Rollbalg ausgebildet.

Der erste Befestigungsbereich mit dem ersten, kleineren Durchmesser kann beispielsweise einer Welle einer Gelenkanordnung zugeordnet sein und der zweite Befestigungsbereich mit dem zweiten, größeren Durchmesser einem Gelenkgehäuse. Die Befestigung des Balges mit dem zweiten Befestigungsbereich erfolgt dann am Gelenkgehäuseaußenteil des Gelenkgehäuses der Gelenkanordnung. Bevorzugt wird der erfindungsgemäße Balg an Gleichlaufverschiebegelenken und Festgelenken angeordnet. Entsprechend sind dann der erste und der zweite Durchmesser des ersten und des zweiten Befestigungsbereiches ausgebildet.

Der erste Bindersitzbereich am Außenumfang des ersten Befestigungsbereiches ist definiert durch eine Zurverfügungstellung einer umlaufenden Außenfläche des Balges, in der ein Binder, zum Beispiel in Form eines Spannbandes oder Kompressionsrings, angeordnet werden kann, so dass der Balg auf einem ersten Maschinenteil, zum Beispiel einer Welle, befestigt ist. Er umfasst zumindest eine Fläche unterhalb des Binders. Er kann begrenzt sein durch mindestens ein erstes und mindestens ein zweites Positioniermittel, die unterschiedlich ausgestaltet sein können. Beispielsweise können diese Positioniermittel als umlaufende Wulste, axial verschoben gegenüberliegend angeordnet am Außenumfang des ersten Befestigungsbereiches, ausgebildet sein, so dass sich zwischen diesen der erste Bindersitzbereich ausbildet. Dann würde genau ein erstes und ein zweites Positioniermittel vorliegen. Das mindestens eine erste und mindestens eine zweite Positioniermittel kann jedoch auch derart ausgestaltet sein, dass diese als ohrförmige Vorsprünge axial beabstandet, bevorzugt paarweise gegenüberliegend, wobei des erste und das zweite Positioniermittel ein Paar bilden, am Außenumfang des ersten Befestigungsbereichs des ersten Bindersitzbereiches ausgebildet sind. Bei einer solchen Ausführungsform sind dann bevorzugt mehrere erste und zweite Positioniermittel am Außenumfang des ersten Befestigungsbereichs angeordnet, bevorzugt wie beschrieben paarweise gegenüberliegend, beispielsweise jeweils mindestens drei, vier, fünf, sechs, sieben, acht oder mehr erste und zweite Positioniermittel. Aber auch Kombinationen der Ausbildung der mindestens einen ersten und mindestens einen zweiten Positioniermittel, wie vorstehend beschrieben, sind möglich. Beispielsweise kann das zweite Positioniermittel als umlaufender Wulst ausgebildet werden, oder aber das zweite Positioniermittel eine umlaufende ringförmige Wand, gebildet aufgrund einer Materialverdickung im Mittelteil oder im konusartigen Fortsatz des Balges, sein, wobei bei der letztgenannten Ausführungsform dann insbesondere ohrförmige zweite Positioniermittel im Bereich der Wand am Außenumfang des ersten Befestigungsbereichs angeordnet sind, wohingegen erste Positioniermittel als ohrförmige Vorsprünge ausgebildet sein können. Aber auch eine umgekehrte oder aber auch sonstig kombinierte Ausbildung ist möglich. Bevorzugt ist der erste Bindersitzbereich, insbesondere bei Vorsehung mindestens eines ersten und mindestens eines zweiten Positioniermittels zwischen diesen, im ersten Befestigungsbereich eben ausgebildet, dass heißt seine Oberfläche weist keinerlei Vertiefungen oder Erhebungen auf. Es kann jedoch auch vorgesehen sein, dass der Bindersitzbereich eine oder mehrere umlaufende Rillen, axial versetzt nebeneinander angeordnet, aufweist.

Der zweite Befestigungsbereich am zweiten, größeren Durchmesser des erfindungsgemäßen Balges weist ebenfalls einen zweiten Bindersitzbereich auf, der durch dort angeordnete erste und zweite Positioniermittel definiert wird. Die dortigen ersten und/oder zweiten Positioniermittel können dabei ausgebildet sein wie vorstehend im Zusammenhang mit dem ersten und zweiten Positioniermittel des ersten Bindersitzbereichs im ersten Befestigungsbereich erläutert. Besonders bevorzugt sind die Positioniermittel des zweiten Bindersitzbereichs als ohrartige Vorsprünge, bevorzugt paarweise gegenüberliegend, wobei ein erstes und ein zweites Positioniermittel ein Paar bilden, axial versetzt ausgebildet. Der zweite Bindersitzbereich selbst kann bevorzugt eben ausgebildet sein, das heißt keine Erhebungen oder Vertiefungen aufweisen, besonders bevorzugt weist dieser jedoch mindestens eine, bevorzugt mindestens zwei, umlaufende Rillen, axial versetzt, im zweiten Bindersitzbereich angeordnet, auf.

Das mindestens eine erste und das mindestens eine zweite Belüftungsmittel sind bevorzugt paarweise gegenüberliegend, das heißt auf einer koaxial zu einer Zentralachse des Balges verlaufenden Achse beabstandet angeordnet, auf der Oberfläche des Innenumfangs des ersten Befestigungsbereiches angeordnet. Dabei bilden ein erstes und ein zweites Belüftungsmittel ein Paar. Ist also nur ein erstes und ein zweites Belüftungsmittel im ersten Befestigungsbereich ausgebildet, so können diese gleichwohl ein Paar bilden, wenn diese einander zugeordnet sind, insbesondere sich gegenüberliegen. Wesentlich bei der Paarbildung ist, dass zwischen dem ersten und dem zweiten Belüftungsmittel ein Bereich gebildet ist, über den ein Überdruck bei Montage eines Balges aus dem Inneren des Balges entweichen kann. Bevorzugt ist auch beidseitig des mindestens einen ersten und des mindestens einen zweiten Belüftungsmittels ein solcher Bereich gebildet, der dem Entweichen von Überdruck dienst. Ein zwischen dem mindestens einen ersten und dem mindestens einen zweiten Belüftungsmittel gebildeter Bereich, der bei einer versetzten Anordnung des mindestens einen ersten und des mindestens einen zweiten Belüftungsmittels, die gleichwohl eine paarartige Anordnung sein kann, winklig zu einer Zentralachse des erfindungsgemäßen Balges verschoben sein kann, ist vorzugsweise eben ausgebildet, das heißt, weist eine Oberfläche auf, welche keine Erhebungen oder Vertiefungen aufweist. Besonders bevorzugt weist dieser Bereich zumindest keine Erhebung auf, welche eine Höhe des mindestens einen ersten und des mindestens einen zweiten Belüftungsmittels, bestimmt ausgehend von der Oberfläche des Innenumfanges des ersten Befestigungsbereiches, überragt.

Besonders bevorzugt sind mindestens drei erste und mindestens drei zweite, weiter bevorzugt mindestens vier, mindestens fünf, mindestens sechs, mindestens sieben, mindestens acht, mindestens neun oder mehr erste und zweite Belüftungsmittel vorgesehen, die weiter bevorzugt gleichmäßig auf der Oberfläche des Innenumfangs des ersten Befestigungsbereichs angeordnet sind, noch weiter bevorzugt wie vorstehend beschrieben paarweise einander zugeordnet, bevorzugt paarweise gegenüberliegend, das heißt koaxial auf einer zu einer Zentralachse des Balges verlaufenden Achse beabstandet angeordnet.

Dadurch, dass die mindestens einen ersten und mindestens einen zweiten Belüftungsmittel über die Oberfläche des Innenumfangs des ersten Befestigungsbereichs hervorstehen, wird erfindungsgemäß während der Montage des erfindungsgemäßen Balges auf einem ersten Maschinenteil, beispielsweise einer Welle, zwischen diesen ein freier Raum gebildet, der zusammen mit dem Bereich um das mindestens eine erste und das mindestens eine zweite Belüftungselement herum eine Durchtrittsöffnung bildet, durch die während der Montage insbesondere Luft durchtreten kann, so dass die Bildung eines Überdrucks im Balg, genauer in dem aus einem ersten und einem zweiten Maschinenteil montierten Balg gebildeten System, umfassend vorteilhafterweise weiterhin insbesondere eine Fettfüllung im Inneren des Balges, vermieden ist. Bei diesem Druckausgleich aufgrund der Schaffung einer Durchtrittsöffnung kann dann gegebenenfalls auch überschüssiges Fett austreten. Bei der vorstehend beschriebenen Montage erfolgt noch keine Schließung über ein Befestigungsmittel. Damit kann bezogen auf das Befestigungsmittel, soweit es schon vormontiert, aber nicht geschlossen vorliegt, oder aber bezogen auf die nicht-befestigte Anordnung des Balges auf einer Welle dieser Teil der Montage als Offenstellung bezeichnet werden. Besonders vorteilhaft ist die Anordnung des mindestens einen ersten und des mindestens einen zweiten Belüftungsmittels dann, wenn der Balg bereits vormontiert auf dem zweiten Maschinenteil befestigt ist und das erste Maschinenteil durch die Öffnung im Bereich des ersten Befestigungsbereichs des Balges hindurch eingeschoben wird zur Anordnung am zweiten Maschinenteil. Dabei erfolgt üblicherweise eine Aufweitung, insbesondere eine radial um den vollen Umfang verlaufende Aufweitung, des ersten Befestigungsbereichs, so dass im Bereich zwischen Außenumfang des ersten Maschinenteils und dem ersten Befestigungsbereich ein Druck erzeugt wird, welcher jedoch nicht dazu führt, dass die Oberfläche des Innenumfangs des ersten Befestigungsbereichs sich an die Oberfläche des ersten Maschinenteils anlegt und damit bereits zu einer dichten Schließung führt. Denn durch die Vorsehung des mindestens einen ersten und des mindestens einen zweiten Belüftungsmittels wird gerade solches an zumindest einer Stelle des ersten Befestigungsbereichs an dessen Innenumfang vermieden, so dass zumindest dort dann beispielweise Luft und/oder Fett austreten kann, wodurch ein sich möglicherweise aufgebauter Innendruck aus dem Inneren des Balges ausgeglichen ist. Erfindungsgemäß erfolgt bei Überführung des Befestigungsmittels in eine Schließstellung bzw. in eine Befestigungsstellung des Balges auf einem ersten Maschinenteil, insbesondere einer Welle, eine Materialverschiebung des Materials des ersten Befestigungsbereiches bzw. ersten Bindersitzbereiches in den Bereich zwischen dem mindestens einen ersten und dem mindestens einen zweiten Belüftungsmittel, so dass eine Schließung der dort gebildeten Öffnung erfolgt. Dadurch wird der Durchtritt von Fett aus einer Fettfüllung nach erfolgter Montage mit Befestigung des Balges auf einem ersten Maschinenteil sicher verhindert. Der Abstand zwischen mindestens einem ersten und mindestens einem zweiten Belüftungsmittel, koaxial beabstandet, ggf. auch winklig, in Bezug auf eine Zentralachse des Balges am Innenumfang des ersten Befestigungsbereiches angeordnet ist erfindungsgemäß so gewählt, dass nach Befestigung des Balges auf einem ersten Maschinenteil, insbesondere einer Welle, eine Materialverschiebung oder Materialanhäufung in einem Bereich zwischen dem mindestens einen ersten und dem mindestens einen zweiten Belüftungsmittel vorliegt, die insbesondere ein Entweichen von Fett aus einem Inneren des Balges verhindert bzw. zu einer dichten Anlage des ersten Befestigungsbereiches an einer Oberfläche des ersten Maschinenteils führt. Eine dauerhafte Belüftungssituation wird dadurch vermieden, die aufgrund der damit notwendigerweise einhergehenden Verbindung zwischen Balginnerem und Außen einen Fettaustritt fördert. Eine Oberfläche des ersten Maschinenteils ist eben, das heißt insbesondere ohne eine Vertiefung wie eine umlaufende Nut oder ähnliches, ausgebildet, oder aber weist nur eine flache Vertiefung, insbesondere eine flache umlaufende Nut, auf.

Bevorzugt weist das mindestens eine erste und/oder das mindestens eine zweite Belüftungsmittel in einer Draufsicht auf den Innenumfang des ersten Befestigungsbereichs eine in etwa elliptische Form auf. Die Draufsicht erfolgt in etwa senkrecht in Bezug auf die Oberfläche des Innenumfangs des ersten Befestigungsbereichs. Das mindestens eine erste und/oder mindestens eine zweite Belüftungsmittel muss nicht exakt eine elliptische Form aufweisen. Vielmehr kann diese davon abweichen, soweit die Form im Wesentlichen eine Hauptachse und eine Nebenachse entsprechend einer Ellipse aufweist. Das mindestens eine erste und/oder mindestens eine zweite Belüftungsmittel ist im Wesentlichen länglich ausgebildet. Bevorzugt ist eine Hauptachse des mindestens einen ersten und/oder des mindestens einen zweiten Belüftungsmittels in etwa koaxial zu der Zentralachse des Balges ausgebildet. Insbesondere eine Abweichung von bis zu etwa +/- 20°, weiter bevorzugt etwa +/- 10° von einer koaxialen Anordnung ist möglich und von dem Begriff "in etwa koaxial" erfindungsgemäß umfasst.

Im Querschnitt gesehen weist das mindestens eine erste und/oder mindestens eine zweite Belüftungsmittel eine in etwa konvexe Ausgestaltung auf. Die konvexe Ausgestaltung bezieht sich insbesondere auf den Übergang von der Oberfläche des Innenumfangs des ersten Befestigungsbereichs beidseitig des mindestens einen ersten und/oder mindestens zweiten Belüftungsmittels mit einer konvexen Krümmung. In einem Mittelbereich zwischen diesen beiden konvexen Krümmungsbereichen kann das mindestens eine erste und/oder mindestens eine zweite Belüftungsmittel eben oder aber auch gekrümmt ausgebildet sein. Bei einer ebenen Ausbildung ist der Mittelbereich in etwa parallel zu der Oberfläche des Innenumfangs des ersten Befestigungsbereichs des Balges im unbefestigten Zustand ausgebildet. Im Übergangsbereich der konvexen Krümmung des mindestens einen ersten und/oder mindestens einen zweiten Belüftungsmittels kann zur Erzielung eines möglichst weichen Übergangs von der Oberfläche des Innenumfangs des ersten Befestigungsbereichs ein Krümmungsbereich mit einer konkaven Krümmung angeordnet sein. Statt als elliptisch geformt kann das mindestens eine erste und/oder mindestens eine zweite Belüftungsmittel auch als ellipsoidal konvex oder aber als linsenartig geformt angesprochen werden. Die vorstehenden Begrifflichkeiten sind von dem Begriff einer "in etwa elliptischen Form" gemäß der vorliegenden Erfindung umfasst.

Das mindestens eine erste und/oder eine zweite Belüftungsmittel ist erfindungsgemäß derart ausgebildet, dass bei Montage des Balges auf einem ersten Maschinenteil eine Durchtrittsöffnung zur Verfügung gestellt ist, durch welche während der Montage Luft und/oder Fett aus einem Innenraum des Balges entweichen kann. Darüber hinaus ist vorteilhafterweise das mindestens eine erste und/oder mindestens eine zweite Belüftungsmittel derart ausgebildet, dass dieses nach vollständiger Montage des Balges auf einem ersten Maschinenteil einer hinreichenden Dichtwirkung im Bereich des ersten Befestigungsbereichs nicht entgegensteht. Es kann auch vorgesehen sein, dass das mindestens eine erste und/oder mindestens eine zweite Belüftungsmittel im Gebrauch verschleißt, so dass hierdurch die Dichtwirkung noch weiter verbessert wird.

In einer besonders bevorzugten Ausführungsform ist das mindestens eine erste und/oder mindestens eine zweite Belüftungsmittel materialeinheitlich mit dem ersten Befestigungsbereich ausgebildet. Besonders bevorzugt sind sämtliche erste und/oder zweite Belüftungsmittel materialeinheitlich mit dem ersten Befestigungsbereich ausgebildet. Das Material des erfindungsgemäßen Balges und damit auch dasjenige des ersten Befestigungsbereichs und des mindestens einen ersten und des mindestens einen zweiten Belüftungsmittels ist ausgewählt aus einer Gruppe umfassend thermoplastisch elastomere Materialien (TPE) und ist insbesondere ausgewählt aus einer Gruppe umfassend thermoplastische Ester-Ether-Elastomere (TEEE). Aber beispielsweise können auch thermoplastische Vulkanisate (TPV) oder thermoplastische Olefine und Polychloroprene eingesetzt werden.

Bevorzugt ist das mindestens eine erste und/oder das mindestens eine zweite Belüftungsmittel zumindest teilweise unterhalb des mindestens einen ersten und/oder des mindestens einen zweiten Positioniermittels auf der Oberfläche des Innenumfangs des ersten Befestigungsbereichs angeordnet. Bevorzugt ist sowohl das mindestens eine erste als auch das mindestens eine zweite Belüftungsmittel unterhalb des mindestens einen ersten und des mindestens einen zweiten Positioniermittels auf der Oberfläche des Innenumfangs des ersten Befestigungsbereichs angeordnet. Durch die erfindungsgemäße Anordnung wird ein relativ großer Abstand des mindestens einen ersten und des mindestens einen zweiten Befestigungsmittels voneinander erzielt, so dass diese einer ausreichenden Dichtwirkung nach Abschluss der Montage des erfindungsgemäßen Balges auf einem ersten Maschinenteil nicht im Wege stehen. Durch die Befestigung mittels eines Befestigungsmittels, insbesondere eines Kompressionsbandes oder Spannbandes, kann eine vollständige Dichtung erzielt werden. Hierdurch bildet sich erfindungsgemäß zwischen dem mindestens einen ersten und dem mindestens einen zweiten Positioniermittel nach Befestigung mittels des Befestigungsmittels ein Bereich mit einer wulstartigen Materialverschiebung am Innenumfang des ersten Befestigungsbereiches auf, deren Oberfläche mit der Oberfläche des ersten Maschinenteils in einer dort vorzugsweise vorgesehenen umlaufenden Nut in Kontakt steht. Dabei kann die Materialverschiebung bei Vorsehung mehrerer erster und zweiter Belüftungsmittel auch als umlaufende Ringwulst ausgebildet sein. Hierdurch wird eine hinreichende Dichtwirkung zur Verfügung gestellt.

Das erste und/oder zweite Positioniermittel weisen jeweils eine äußere Seitenfläche und eine innere Seitenfläche als auch zwischen diesen angeordnet vorzugsweise eine Oberseite auf. Eine Positionierung unterhalb der solchermaßen ausgebildeten ersten und/oder zweiten Positioniermittel im Sinne der vorliegenden Erfindung bedeutet, dass das mindestens eine erste und/oder mindestens eine zweite Belüftungsmittel zumindest unterhalb der inneren Seitenflächen, weiter bevorzugt auch unterhalb zumindest eines Teiles der Oberseite des ersten und/oder zweiten Positioniermittels angeordnet ist. Die Oberseite des ersten und/oder zweiten Positioniermittels ist dabei bevorzugt im Wesentlichen parallel zu einer Oberfläche des ersten Bindersitzbereichs ausgebildet. Eine Anordnung des mindestens einen ersten und/oder mindestens einen zweiten Belüftungsmittels kann auch vollständig unterhalb des mindestens einen ersten und des mindestens einen zweiten Positioniermittels erfolgen. Zur Erzielung des erfindungsgemäßen Erfolgs ist dies jedoch nicht notwendig. Es reicht insbesondere eine zumindest teilweise Anordnung des mindestens einen ersten und/oder mindestens einen zweiten Belüftungsmittels unterhalb des mindestens einen ersten und mindestens einen zweiten Positioniermittels. Im Wesentlichen kommt es auf die Funktion an, dass ein ausreichender Abstand zwischen dem mindestens einen ersten und dem mindestens einen zweiten Belüftungsmittel zur Ausbildung einer hinreichenden Dichtung im Bereich zwischen diesen nach Abschluss der Montage des Balges durch Befestigung mit einem Befestigungsmittel auf einem ersten Maschinenteil erzielt wird.

Bevorzugt ist eine Oberfläche des ersten Bindersitzbereichs in etwa parallel zu der Oberfläche des Innenumfangs des ersten Befestigungsbereichs ausgebildet. Weiter bevorzugt ist die Oberfläche des ersten Bindersitzbereichs ebenso wie die Oberfläche des Innenumfangs des ersten Befestigungsbereichs eben, das heißt ohne Erhebungen und/oder Vertiefungen, ausgebildet, ausgenommen das mindestens eine erste und/oder mindestens eine zweite Belüftungsmittel. Bei den genannten Ausbildungen kann eine zuverlässige Dichtwirkung bei Abschluss der Montage des erfindungsgemäßen Balges auf dem ersten Maschinenteil erfolgen, wobei dann auch zugleich eine Zurverfügungstellung einer Durchtrittsöffnung während der Montage, insbesondere vor oder bei Anordnung des Befestigungsmittels und Schließung desselben, ermöglicht ist.

Die vorliegende Erfindung betrifft weiterhin ein Verfahren zur Befestigung eines erfindungsgemäßen Balges wie vorstehend definiert auf einem ersten Maschinenteil, insbesondere einer Welle, wobei eine Befestigung des ersten Befestigungsbereichs mit dem ersten Durchmesser auf dem ersten Maschinenteil durch ein Befestigungsmittel derart erfolgt, dass während der Anbringung des Befestigungsmittels insbesondere durch Ausüben eines Druckes durch dieses auf den ersten Befestigungsbereich, zumindest in Teilbereichen zwischen der Oberfläche des Innenumfangs des ersten Befestigungsbereichs und einer Oberfläche des ersten Maschinenteils eine Durchtrittsöffnung zur Verfügung gestellt wird, wobei durch Befestigung des ersten Befestigungsbereiches mittels des Befestigungsmittels zwischen axial beabstandeten ersten und zweiten Belüftungsmitteln ein Bereich mit einer wulstartigen Materialverschiebung ausgebildet wird, der mit der Oberfläche des ersten Maschinenteils in Kontakt steht. Besonders bevorzugt wird der erste Befestigungsbereich zur Anordnung des ersten Maschinenteils an einem zweiten Maschinenteil aufgeweitet, weiter bevorzugt in Form einer über den vollen Umfang des ersten Befestigungsbereiches erfolgenden Aufweitung. In einem alternativen erfindungsgemäßen Verfahren zur Befestigung des erfindungsgemäßen Balges wird der Balg auf einem ersten Maschinenteil, insbesondere einer Welle, befestigt, wobei der erste Befestigungsbereich zur Anordnung des ersten Maschinenteils an einem zweiten Maschinenteil aufgeweitet wird, weiter bevorzugt ebenfalls in Form einer über den vollen Umfang des ersten Befestigungsbereiches erfolgenden Aufweitung, so dass zumindest in Teilbereichen zwischen der Oberfläche des Innenumfangs des ersten Befestigungsbereichs und einer Oberfläche des ersten Maschinenteils eine Durchtrittsöffnung zur Verfügung gestellt wird. Aufgrund der elastischen Eigenschaften der für den erfindungsgemäßen Balg eingesetzten Materialien wird nach Aufweitung, bevorzugt in Form einer über den vollen Umfang des ersten Befestigungsbereiches erfolgenden Aufweitung, des ersten Befestigungsbereichs dieser in die Ausgangsposition vor Aufweitung zurückkehren, wodurch eine Art einer Vormontage des Balges mit dem ersten Befestigungsbereich auf dem ersten Maschinenteil erfolgt.

Bei den erfindungsgemäßen Verfahren erfolgt bevorzugt eine Anordnung des ersten Befestigungsbereichs des erfindungsgemäßen Balges im Bereich einer umlaufenden Nut, die flach ausgebildet sein kann, auf dem ersten Maschinenteil, beispielsweise einer Welle. Diese muss aber nicht notwendigerweise vorhanden sein. Nachfolgend der Aufweitung wird bei dem alternativen erfindungsgemäßen Verfahren das Befestigungsmittel, insbesondere ein Kompressionsband oder Spannband, im ersten Bindersitzbereich angeordnet und mit diesem der Balg endgültig befestigt. Dabei schließt beziehungsweise schließen sich die Durchtrittsöffnung beziehungsweise Durchtrittsöffnungen und zwischen dem mindestens einen ersten und dem mindestens einen zweiten Belüftungsmittel bildet sich ein Bereich einer umlaufenden Materialverschiebung, die als ein umlaufender Ringwulst beziehungsweise Materialanhäufung ausgebildet sein kann, aus, durch welchen eine hinreichende Dichtwirkung erzielt wird.

Bei einer bevorzugten Ausführungsform des erfindungsgemäßen Verfahrens wird vor Befestigung an dem ersten Maschinenteil der Balg mit dem zweiten Befestigungsbereich und dem zweiten, größeren Durchmesser an einem zweiten Maschinenteil befestigt, beispielsweise einem Gelenkgehäuseaußenteil. Gerade bei derartigen Konstellationen kann bei Anordnung des ersten Maschinenteils am zweiten Maschinenteil die Ausbildung eines Überdrucks im Inneren des Balges erfolgen, welches erfindungsgemäß aufgrund der Vorsehung des mindestens einen ersten und/oder mindestens einen zweiten Belüftungsmittels vermieden wird.

Erfindungsgemäß wird durch Befestigung des ersten Befestigungsbereichs mittels Befestigungsmitteln zwischen den axial beabstandeten ersten und zweiten Belüftungsmitteln ein Bereich einer wulstartigen Materialverschiebung beziehungsweise Materialanhäufung gebildet, deren Oberfläche mit der mit der Oberfläche des ersten Maschinenteils in Kontakt steht. Wenn nur ein Paar, bevorzugt paarweise gegenüberliegend und axial verschoben angeordneter erster und zweiter Belüftungsmittel vorliegen, bildet sich im Bereich zwischen diesen eine wulstartige Verformung bei Befestigung des Balges mit dem ersten Befestigungsbereich durch ein Befestigungsmittel auf dem ersten Maschinenteil aus, die nicht umlaufend ausgebildet ist. Auch hierbei wird eine hinreichende Dichtwirkung zur Verfügung gestellt. Sind am Innenumfang des ersten Befestigungsbereiches eine Vielzahl zum Beispiel solcher Paare erster und zweiter Belüftungsmittel angeordnet, wird die Materialverschiebung als ein umlaufender Ringwulst ausgebildet sein.

Schließlich betrifft die vorliegende Erfindung die Verwendung eines erfindungsgemäßen Balges wie vorstehend definiert für die Abdichtung von Wellen, insbesondere Gelenkwellen, insbesondere bei Gleichlaufverschiebegelenken und Festgelenken. Weiterhin ist Gegenstand der vorliegenden Erfindung eine Gelenkanordnung, umfassend einen erfindungsgemäßen Balg, und bevorzugt ein Gleichlaufverschiebegelenk oder Festgelenk. Die erfindungsgemäße Gelenkanordnung umfasst weiter bevorzugt ein erstes Befestigungsmittel, welches den ersten Befestigungsbereich des Balges, insbesondere eines Rollbalges, auf einer Welle als erstes Maschinenteil befestigt, und ein zweites Befestigungsmittel, welches den zweiten Befestigungsbereich des Balges auf einem Gelenkgehäuse als zweites Maschinenteil befestigt. In der Befestigungs- beziehungsweise Schließstellung liegt im ersten Befestigungsbereich eine Materialverschiebung beziehungsweise Materialanhäufung zwischen dem mindestens einen ersten und dem mindestens einem zweiten Belüftungsmittel vor, deren Oberfläche mit einer Oberfläche der Welle zusammenwirkt und eine Dichtung zur Verfügung stellt, so dass Fett aus dem Inneren des Balges nicht austreten kann.

Diese und weitere Vorteile der vorliegenden Erfindung werden gemäß den nachfolgenden Figuren näher erläutert. Es zeigen:
- Fig. 1:: eine perspektivische Ansicht eines erfindungsgemäßen Balges;
- Fig. 2:: eine vergrößerte perspektivische Ansicht eines ersten Befestigungsbereiches des Balges gemäß Fig. 1;
- Fig. 3:: einen Querschnitt durch den ersten Bindersitzbereich einer Ausführungsform des erfindungsgemäßen Balges mit einem ersten und einem zweiten paar-weise gegenüberliegend angeordneten Belüftungsmittel im unmontierten Zustand;
- Fig. 4:: eine Schnittansicht entsprechend Fig. 3 eines auf einem ersten Maschinenteil nach Aufweitung angeordneten Balges; und
- Fig. 5:: eine Schnittansicht entsprechend Fig. 3 mit dem mittels eines Befestigungs-mittels fest mit dem ersten Maschinenteil verbundenen Balg.

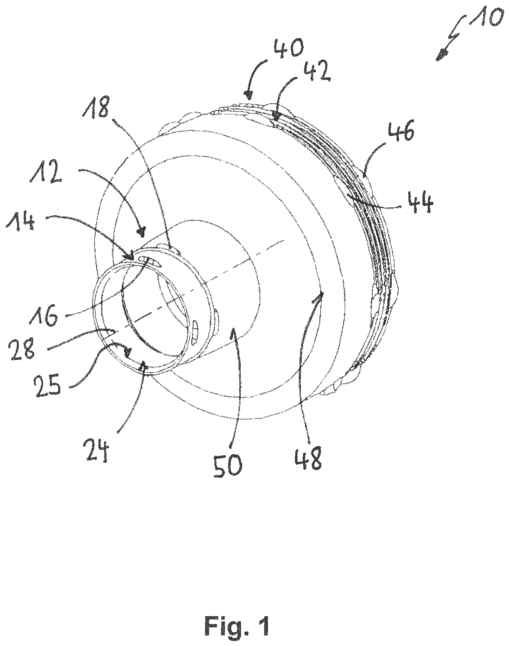

Fig. 1 zeigt in einer perspektivischen Ansicht einen erfindungsgemäßen Balg 10 mit einem ersten Befestigungsbereich 12 mit einem ersten Bindersitzbereich 14 und einem zweiten Befestigungsbereich 40 mit einem zweiten Bindersitzbereich 42, wobei der zweite Befestigungsbereich 40 einen deutlich größeren zweiten Durchmesser aufweist als der erste Durchmesser des ersten Befestigungsbereichs 12. Zwischen dem ersten und dem zweiten Befestigungsbereich 12, 40 ist ein Mittelteil 48 angeordnet. Dieses kann beispielsweise wie bei einem Rollbalg ausgebildet sein entsprechend der Ausführungsform gemäß Fig. 1, aber beispielweise auch faltenbalgartig, wenn der erfindungsgemäße Balg als Faltenbalg ausgebildet ist. Bei der Ausführungsform des Balges 10 gemäß Fig. 1 ist des Weiteren ein konusartiger Fortsatz 50, der sich in Richtung auf den ersten Befestigungsbereich 12 hin verjüngt, angeordnet.

Der erste Bindersitzbereich 14 weist zu beiden Seiten ohrenförmig ausgebildete erste Positioniermittel 16 und zweite Positioniermittel 18, die paarweise gegenüberliegend axial verschoben am Außenumfang des ersten Befestigungsbereiches 12 angeordnet sind, auf. Zwischen diesen ist der Bindersitzbereich 14 gebildet, der eine ebene Oberfläche ohne Erhebungen und Vertiefungen aufweist.

Der zweite Bindersitzbereich 42 ist definiert durch erste und zweite Positioniermittel 44 und 46, die ähnlich wie im ersten Befestigungsbereich 12 als ohrenförmige Vorsprünge paarweise gegenüberliegend und axial verschoben ausgebildet sind. Der Bindersitzbereich 42 weist dabei eine Vielzahl umlaufender Ringnuten auf, so dass dessen Oberfläche am Außenumfang nicht eben wie im ersten Bindersitzbereich 14 ausgebildet ist.

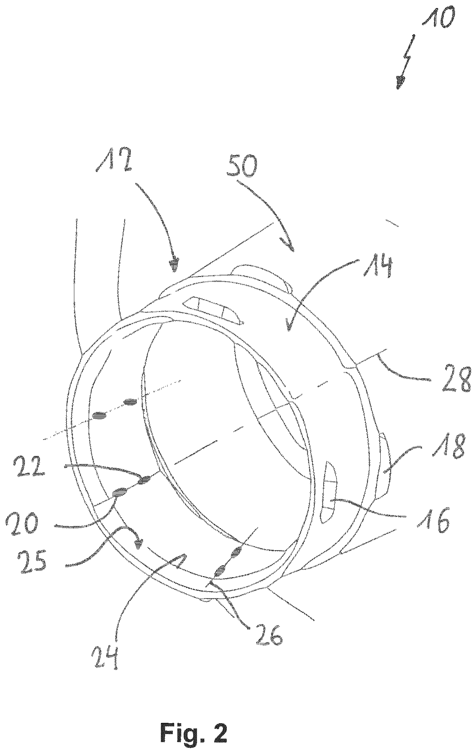

Fig. 2 zeigt in einer vergrößerten Ansicht die Ausgestaltung des ersten Befestigungsbereiches 12 des Balges 10 gemäß Fig. 1. Dort ist insbesondere auch die Anordnung der zweiten Positioniermittel 18 im Bereich einer Wand, gebildet durch eine Art Materialverdickung im konusartigen Fortsatz 50, zu erkennen. Darüber hinaus sind auch die auf einer Oberfläche 24 an einem Innenumfang 25 angeordneten ersten und zweiten Belüftungsmittel 20, 22 zu erkennen, die paarweise gegenüberliegend und axial beabstandet voneinander angeordnet sind. Diese weisen in einer Draufsicht eine in etwa elliptische Ausgestaltung auf. Eine Hauptachse 26, die durch die ersten und zweiten Belüftungsmittel 20 beziehungsweise 22 verläuft, ist koaxial einer Zentralachse 28 (siehe Fig. 1) des Balges 10 ausgerichtet.

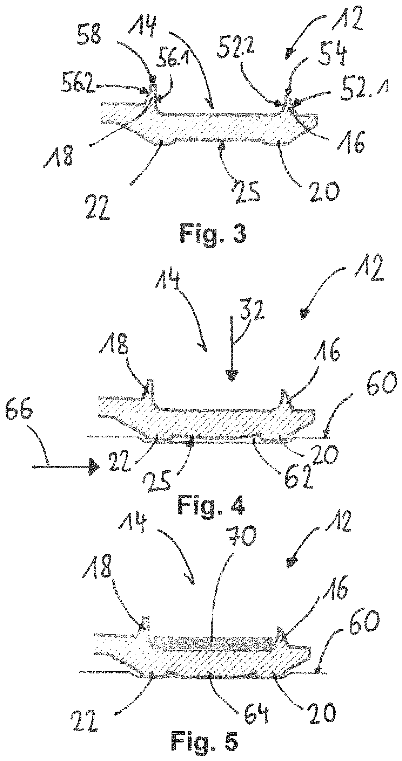

Die genaue Anordnung des ersten und des zweiten Belüftungsmittel 20 beziehungsweise 22 ist in der Querschnittsansicht gemäß Fig. 3 gut zu erkennen. Das erste Belüftungsmittel 20 ist im Querschnitt gesehen ebenso wie das zweite Belüftungsmittel 22 konvex ausgebildet. Beide stehen über die Oberfläche 25 des Innenumfangs 24 hervor. In einem Mittelbereich derselben sind diese abgeflacht ausgebildet. Die Oberfläche des Mittelbereichs ist dabei in etwa parallel zu der Oberfläche 25 des Innenumfangs 24 beziehungsweise der Oberfläche des ersten Bindersitzbereiches 14 ausgebildet.

Das erste Belüftungsmittel 20 ist teilweise unterhalb des ersten Positioniermittels 16 angeordnet. Insbesondere ist es unterhalb eine inneren Seitenfläche 52.2 und zumindest teilweise unterhalb einer Oberseite 54 des ersten Positioniermittels 16 angeordnet, welches weiterhin eine äußere Seitenfläche 52.1 aufweist. Das zweite Belüftungsmittel 22 ist teilweise unterhalb des zweiten Positioniermittels 18 angeordnet im Bereich einer inneren Seitenfläche 56.1 und zumindest teilweise unterhalb einer Oberseite 58 desselben. Das zweite Positioniermittel weist weiterhin eine äußere Seitenfläche 56.2 auf.

Fig. 4 zeigt eine Ausführungsform des erfindungsgemäßen Balges, insbesondere eine bereits über den zweiten Befestigungsbereich 40 mit einem zweiten Maschinenteil verbundene, in einer Querschnittsansicht durch den ersten Befestigungsbereich 12 nach Aufweitung aufgrund Durchführung eines ersten Maschinenteils mit einer Oberfläche 60. Dieser Zustand kann auch als vormontierter Zustand beschrieben werden. Zwischen dem ersten Belüftungsmittel 20 und dem zweiten Belüftungsmittel 22 ist ein Teil einer Durchtrittsöffnung 62 gebildet, die sich vor und hinter dem ersten und zweiten Belüftungsmittel 20 beziehungsweise 22 weiter zu dem inneren und äußeren Ende des ersten Befestigungsbereiches 12 erstreckt. In diesem Zustand kann in Richtung eines Pfeiles 66 Luft oder aber auch Fett aus einem Innenraum des erfindungsgemäßen Balges entweichen. Aufgrund der elastischen Eigenschaften des Materials für den Balg 10 erfolgt eine Beaufschlagung mit Druck in Richtung eines Pfeiles 32, so dass der Balg 10 vormontiert auf dem ersten Maschinenteil in einer dort vorgesehenen flachen Ringnut gehalten ist.

Fig. 5 zeigt einen endmontierten Zustand des ersten Befestigungsbereiches 12 gemäß den Fig. 3 und 4 nach Befestigung eines Befestigungsmittels 70, beispielsweise eines Kompressionsbandes, im ersten Bindersitzbereich 14. Dadurch wird Material des ersten Bindersitzbereiches 14 in Form einer wulstartigen Materialverschiebung 64 zwischen dem ersten Belüftungsmittel 20 und dem zweiten Belüftungsmittel 22 verschoben, so dass eine Oberfläche dieses Wulstes 64 in Kontakt mit der Oberfläche 60 des ersten Maschinenteils kommt. Hierdurch wird eine hinreichende Dichtwirkung des Balges 10 auf dem ersten Maschinenteil zur Verfügung gestellt.

Die in den Figuren gezeigten Merkmale sind nicht auf die einzelnen Ausgestaltungen beschränkt. Vielmehr sind diese jeweils mit der in der Beschreibung einschließlich der Figurenbeschreibung und Zeichnungen angegebenen Merkmalen zur Weiterbildung miteinander kombinierbar. Insbesondere ist der Gegenstand der vorliegenden Erfindung nicht beschränkt auf die in den Figuren gezeigten Ausbildungen des Balges selbst. Dieser kann beispielsweise auch als Faltenbalg ausgebildet sein. Selbiges gilt auch in Hinblick auf die Ausbildung des ersten Befestigungsbereiches 12 und des zweiten Befestigungsbereiches 14 mit den dort vorgesehenen ersten und zweiten Positioniermitteln 16, 18 beziehungsweise 42 und 46. Selbiges gilt weiterhin auch in Hinblick auf die Ausgestaltung der Oberfläche des ersten Bindersitzbereiches 14 und des zweiten Bindersitzbereiches 42. Schließlich gilt selbiges auch in Hinblick auf die Ausgestaltung und Anordnung der ersten und zweiten Belüftungsmittel 20 beziehungsweise 22, welche beispielsweise auch eine andere Form aufweisen können, oder aber auch in einer größeren Anzahl oder geringeren Anzahl und nicht nur paarweise gegenüberliegend, sondern auch versetzt zueinander, gleichwohl axial verschoben auf der Oberfläche 25 des Innenumfangs 24 des ersten Befestigungsbereiches 12 angeordnet sein können. Entsprechende Belüftungsmittel können beispielsweise auch im zweiten Befestigungsbereich 40 an dessen Innenumfang angeordnet sein.

Durch die vorliegende Erfindung wird vorteilhafterweise ein Balg zur Verfügung gestellt, mit welchem sich eine Ausbildung eines Innendrucks bei der Montage des Balges auf einem ersten und einem zweiten Maschinenteil vermeiden lässt, und nach Montage eine hinreichende Dichtwirkung aufweist, die ein Austreten von Fett einer Fettfüllung des Balges verhindert. Besonders vorteilhaft ist dies insbesondere dann, wenn der Balg bereits an einem zweiten Maschinenteil mit seinem großen Durchmesser mit seinem zweiten Befestigungsbereich montiert ist, so dass nachfolgend das erste Maschinenteil durch die kleine Öffnung am kleinen Durchmesser im ersten Befestigungsbereich des Balges eingeschoben werden muss.

## Patentansprüche

1. Balg (10) mit einem ersten Befestigungsbereich (12) mit einem ersten Durchmesser und mit einem zweiten Befestigungsbereich (40) mit einem zweiten Durchmesser, wobei der erste Durchmesser kleiner als der zweite Durchmesser ist, und wobei der erste Befestigungsbereich (12) auf seinem Außenumfang einen Bindersitzbereich (14) umfasst, wobei an einem Innenumfang (24) des ersten Befestigungsbereiches (12) mindestens ein erstes und mindestens ein zweites Belüftungsmittel (20, 22) axial beabstandet voneinander an dem mit einer ebenen Oberfläche (25) ausgebildeten Innenumfang (24) angeordnet sind und über die Oberfläche (25) des Innenumfangs (24) hervorstehen, wobei durch Befestigung des ersten Befestigungsbereiches (12) mittels des Befestigungsmittels (70) zwischen axial beabstandeten ersten und zweiten Belüftungsmitteln (20, 22) ein Bereich mit einer wulstartigen Materialverschiebung (64) ausbildbar ist, der mit einer Oberfläche (60) eines ersten Maschinenteils in Kontakt bringbar ist.

2. Balg gemäß Anspruch 1, **dadurch gekennzeichnet, dass** das mindestens eine erste und das mindestens eine zweite Belüftungsmittel (20, 22) paarweise gegenüberliegend auf der Oberfläche (25) des Innenumfangs (24) des ersten Befestigungsbereiches (2) angeordnet sind.

3. Balg gemäß einem oder mehreren der vorhergehenden Ansprüche, **dadurch gekennzeichnet, dass** mindestens drei erste und mindestens drei zweite Belüftungsmittel (20, 22) vorgesehen sind, die gleichmäßig auf der Oberfläche (25) des Innenumfangs (24) des ersten Befestigungsbereiches (12) angeordnet sind.

4. Balg gemäß einem oder mehreren der vorhergehenden Ansprüche, **dadurch gekennzeichnet, dass** das erste und/oder das zweite Belüftungsmittel (20, 22) in einer Draufsicht eine in etwa elliptische Form aufweist.

5. Balg gemäß Anspruch 4, **dadurch gekennzeichnet, dass** eine Hauptachse (26) eines in etwa elliptisch ausgebildeten ersten und/oder zweiten Belüftungsmittels (20, 22) in etwa koaxial zu einer Zentralachse (28) des Balges (10) ausgerichtet ist.

6. Balg gemäß einem oder mehreren der vorhergehenden Ansprüche, **dadurch gekennzeichnet, dass** das mindestens eine erste und/oder das mindestens eine zweite Belüftungsmittel (20, 22) materialeinheitlich mit dem ersten Befestigungsbereich (12) ausgebildet ist.

7. Balg gemäß einem oder mehreren der vorhergehenden Ansprüche, **dadurch gekennzeichnet, dass** das mindestens eine erste und/oder das mindestens eine zweite Belüftungsmittel (20, 22) zumindest teilweise unterhalb mindestens eines ersten und/oder mindestens eines zweiten Positionsmittels (16, 18) auf der Oberfläche (25) des Innenumfangs (24) des ersten Befestigungsbereichs (12) angeordnet ist.

8. Balg gemäß einem oder mehreren der vorhergehenden Ansprüche, **dadurch gekennzeichnet, dass** eine Oberfläche (30) des ersten Bindersitzbereiches (14) in etwa parallel zu der Oberfläche (25) des Innenumfangs des ersten Befestigungsbereichs (12) ausgebildet ist.

9. Verfahren zur Befestigung eines Balges (10) gemäß einem oder mehreren der Ansprüche 1 bis 8 auf einem ersten Maschinenteil, insbesondere einer Welle, wobei eine Befestigung des ersten Befestigungsbereichs (12) mit dem ersten Durchmesser auf dem ersten Maschinenteil durch ein Befestigungsmittel (70) derart erfolgt, dass während der Anbringung des Befestigungsmittels (70) zumindest in Teilbereichen zwischen der Oberfläche (25) des Innenumfangs (24) des ersten Befestigungsbereichs (12) und einer Oberfläche (60) des ersten Maschinenteils eine Durchtrittsöffnung (62) zur Verfügung gestellt wird, wobei durch Befestigung des ersten Befestigungsbereiches (12) mittels des Befestigungsmittels (70) zwischen axial beabstandeten ersten und zweiten Belüftungsmitteln (20, 22) ein Bereich mit einer wulstartigen Materialverschiebung (64) ausgebildet wird, der mit der Oberfläche (60) des ersten Maschinenteils in Kontakt steht.

10. Verfahren gemäß Anspruch 9, **dadurch gekennzeichnet, dass** der erste Befestigungsbereich (12) zur Anordnung des ersten Maschinenteiles an einem zweiten Maschinenteil aufgeweitet wird.

11. Verfahren zur Befestigung eines Balges (10) gemäß einem oder mehreren der Ansprüche 1 bis 8 auf einem ersten Maschinenteil, insbesondere einer Welle, wobei der erste Befestigungsbereich (12) zur Anordnung des ersten Maschinenteils an einem zweiten Maschinenteil aufgeweitet wird, so dass zumindest in Teilbereichen zwischen der Oberfläche (25) des Innenumfangs (24) des ersten Befestigungsbereichs (12) und einer Oberfläche (60) des ersten Maschinenteils eine Durchtrittsöffnung (62) zur Verfügung gestellt wird.

12. Verfahren gemäß einem oder mehreren der Ansprüche 9 bis 11, **dadurch gekennzeichnet, dass** der Balg (10) vor Befestigung an dem ersten Maschinenteil mit dem zweiten Befestigungsbereich (40) mit dem zweiten, größeren Durchmesser an einem zweiten Maschinenteil, insbesondere einem Gelenkgehäuseaußenteil, befestigt wird.

13. Verwendung eines Balges gemäß einem oder mehreren der Ansprüche 1 bis 8 für die Abdichtung von Wellen, insbesondere Gelenkwellen.

14. Gelenkanordnung, umfassend einen Balg gemäß einem oder mehreren der Ansprüche 1 bis 8.

## Claims

1. Bellows (10) with a first fastening region (12) with a first diameter and with a second fastening region (40) with a second diameter, the first diameter being smaller than the second diameter, and wherein the first fastening region (12) comprises a binder seat region (14) on its outer circumference, wherein on an inner circumference (24) of the first fastening region (12) at least a first and at least a second aeration means (20, 22) are axially spaced apart from one another arranged on said inner circumference (24) which has a flat surface (25), and protrude above the surface (25) of the inner circumference (24), wherein by fastening the first fastening region (12) by means of a fastening means (70) between axially spaced-apart first and second aeration means (20, 22), an area with a bead-like material displacement (64) is formable, which can be brought into contact with a surface (60) of a first machine part.

2. Bellows according to claim 1, **characterized in that** the at least one first and the at least one second aeration means (20, 22) are arranged in pairs opposite one another on the surface (25) of the inner circumference (24) of the first fastening region (2).

3. Bellows according to one or more of the preceding claims, **characterized in that** at least three first and at least three second aeration means (20, 22) are provided, which are arranged uniformly on the surface (25) of the inner circumference (24) of the first fastening region (12).

4. Bellows according to one or more of the preceding claims, **characterized in that** the first and/or the second aeration means (20, 22) has an approximately elliptical shape in a plan view.

5. Bellows according to claim 4, **characterized in that** a main axis (26) of an approximately elliptical first and/or second aeration means (20, 22) is aligned approximately coaxially to a central axis (28) of the bellows (10).

6. Bellows according to one or more of the preceding claims, **characterized in that** the at least one first and/or the at least one second aeration means (20, 22) is made of the same material as the first fastening region (12).

7. Bellows according to one or more of the preceding claims, **characterized in that** the at least one first and/or the at least one second aeration means (20, 22) is arranged at least partially below at least one first and/or at least one second positioning means (16, 18) on the surface (25) of the inner circumference (24) of the first fastening region (12).

8. Bellows according to one or more of the preceding claims, **characterized in that** a surface (30) of the first binder seat region (14) is approximately parallel to the surface (25) of the inner circumference of the first fastening region (12).

9. Method for fastening a bellows (10) according to one or more of claims 1 to 8 on a first machine part, in particular a shaft, wherein a fastening of the first fastening region (12) with the first diameter on the first machine part by means of a fastening means (70) is carried out in such a way that during the attachment of the fastening means (70) a passage opening (62) is provided at least in partial areas between the surface (25) of the inner circumference (24) of the first fastening region (12) and a surface (60) of the first machine part, wherein by fastening the first fastening region (12) by means of the fastening means (70) between axially spaced-apart first and second aeration means (20, 22) an area with a bead-like material displacement (64) is formed, which is in contact with the surface (60) of the first machine part.

10. Method according to claim 9, **characterized in that** the first fastening region (12) is expanded to arrange the first machine part on a second machine part.

11. Method for fastening a bellows (10) according to one or more of claims 1 to 8 on a first machine part, in particular a shaft, wherein the first fastening region (12) is expanded to arrange the first machine part on a second machine part, so that a passage opening (62) is provided at least in partial areas between the surface (25) of the inner circumference (24) of the first fastening region (12) and a surface (60) of the first machine part.

12. Method according to one or more of claims 9 to 11, **characterized in that** the bellows (10), before being attached to the first machine part with the second attachment region (40) having the second, larger diameter, is attached to a second machine part, in particular an outer joint housing.

13. Use of a bellows according to one or more of claims 1 to 8 for sealing shafts, in particular car-dan shafts.

14. Joint arrangement comprising a bellows according to one or more of claims 1 to 8.

## Revendications

1. Soufflet (10) comprenant une première zone de fixation (12) qui présente un premier diamètre et une seconde zone de fixation (40) qui présente un second diamètre, dans lequel le premier diamètre est plus petit que le second diamètre, et dans lequel la première zone de fixation (12) comporte sur son pourtour extérieur une zone d'application de liant (14), dans lequel au moins un premier et au moins un second moyens de ventilation (20, 22) sont disposés à distance axiale l'un de l'autre sur un pourtour intérieur (24) de la première zone de fixation (12) sur le pourtour intérieur (24) formé avec une surface plane (25) et sont saillants au-dessus de la surface (25) du pourtour intérieur (24), dans lequel une zone à déplacement de matière en forme de bourrelet (64) peut être formée par fixation de la première zone de fixation (12) à l'aide du moyen de fixation (70) entre un premier et un second moyens de ventilation (20, 22) axialement distants, et peut être mise en contact avec la surface (60) d'une première partie de machine.

2. Soufflet selon la revendication 1, **caractérisé en ce que** ledit au moins un premier et ledit au moins un second moyens de ventilation (20, 22) sont disposés par paires l'un en face de l'autre sur la surface (25) du pourtour intérieur (24) de la première zone de fixation (2).

3. Soufflet selon une ou plusieurs des revendications précédentes, **caractérisé en ce qu'**il est prévu au moins trois premiers et au moins trois seconds moyens de ventilation (20, 22) qui sont disposés uniformément sur la surface (25) du pourtour intérieur (24) de la première zone de fixation (12).

4. Soufflet selon une ou plusieurs des revendications précédentes, **caractérisé en ce que** le premier et/ou le second moyen(s) de ventilation (20, 22) présente(nt) dans une vue en plan une forme approximativement elliptique.

5. Soufflet selon la revendication 4, **caractérisé en ce qu'**un axe principal (26) d'un premier et/ou d'un second moyen(s) de ventilation (20, 22) de forme approximativement elliptique est orienté de façon approximativement coaxiale à un axe central (28) du soufflet (10).

6. Soufflet selon une ou plusieurs des revendications précédentes, **caractérisé en ce que** ledit au moins un premier et/ou ledit au moins un second moyen(s) de ventilation (20, 22) est (sont) réalisé(s) de façon matériellement unitaire avec la première zone de fixation (12).

7. Soufflet selon une ou plusieurs des revendications précédentes, **caractérisé en ce que** ledit au moins un premier et/ou ledit au moins un second moyen(s) de ventilation (20, 22) est (sont) disposé(s) au moins en partie en dessous d'au moins un premier et/ou d'au moins un second moyen(s) de positionnement (16, 18) sur la surface (25) du pourtour intérieur (24) de la première zone de fixation (12).

8. Soufflet selon une ou plusieurs des revendications précédentes, **caractérisé en ce qu'**une surface (30) de la première zone d'application de liant (14) est approximativement parallèle à la surface (25) du pourtour intérieur (24) de la première zone de fixation (12).

9. Procédé de fixation d'un soufflet (10) selon une ou plusieurs des revendications 1 à 8 sur une première partie de machine, en particulier un arbre, dans lequel on effectue une fixation de la première zone de fixation (12) qui présente le premier diamètre sur la première partie de machine à l'aide d'un moyen de fixation (70), de telle manière que, pendant la pose du moyen de fixation (70), il se forme une ouverture de passage (62) au moins dans des zones partielles entre la surface (25) du pourtour intérieur (24) de la première zone de fixation (12) et une surface (60) de la première partie de machine, dans lequel on forme, par fixation de la première zone de fixation (12) à l'aide du moyen de fixation (70) entre un premiers et un seconds moyens de ventilation axialement espacés (20, 22), une zone à déplacement de matière en forme de bourrelet (64) qui est en contact avec la surface (60) de la première partie de machine.

10. Procédé selon la revendication 9, **caractérisé en ce que** l'on élargit la première zone de fixation (12) pour l'agencement de la première partie de machine sur la seconde partie de machine.

11. Procédé de fixation d'un soufflet (10) selon une ou plusieurs des revendications 1 à 8 sur une première partie de machine, en particulier un arbre, dans lequel on élargit la première zone de fixation (12) pour l'agencement de la première partie de machine sur une seconde partie de machine, de telle manière qu'il se forme une ouverture de passage (62) au moins dans des régions partielles entre la surface (25) du pourtour intérieur (24) de la première zone de fixation (12) et une surface (60) de la première partie de machine.

12. Procédé selon une ou plusieurs des revendications 9 à 11, caractérisé en ce l'on fixe le soufflet (10) avant la fixation de la première partie de machine par l'intermédiaire de la seconde zone de fixation (40) qui présente le second plus grand diamètre à une seconde partie de machine, en particulier une partie extérieure du boîtier d'articulation.

13. Utilisation d'un soufflet selon une ou plusieurs des revendications 1 à 8, pour l'étanchéité d'arbres, en particulier d'arbres de transmission.

14. Ensemble d'articulation comprenant un soufflet selon une ou plusieurs des revendications 1 à 8.
